# EUROPEAN PATENT SPECIFICATION

(11) **EP 1 113 722 B1**
(45) Date of publication and mention of the grant of the patent: **18.12.2002**
(21) Application number: 99942787.5
(22) Date of filing: 16.09.1999
(51) Int. Cl.: A22C 21/00

(54) **Method and apparatus for suspending Poultry to be slaughtered, in particular Chickens**
VERFAHREN UND APPARAT ZUM AUFHÄNGEN VON GEFLÜGEL, INSBESONDERE HÜHNER
PROCEDE ET APPAREIL DE SUSPENSION DE VOLAILLE A ABATTRE, EN PARTICULIER DE POULETS

(30) Priority: 16.09.1998 DK 116998
(43) Date of publication of application: 11.07.2001
(73) Proprietor: LINDHOLST & CO. A/S, 8380 Trige (DK)
(72) Inventor: KJELDSEN, Poul, DK-8400 Ebeltoft (DK); KVORNING, Keld, DK-8963 Auning (DK)
(74) Representative: Gregersen, Niels Henrik
(86) International application number: DK9900493
(87) International publication number: WO00018245

(56) References cited:
- DE-A1- 3 048 342
- GB-A- 1 207 020
- US-A- 1 967 229
- US-A- 3 472 300

## Description

The present invention relates to a method for suspending poultry to be slaughtered, particularly chickens, and of the kind indicated in the preamble of claim 1.

Suspending or re-suspending poultry to be slaughtered, especially broilers, for example after water chiller, in transport shackles in a poultry slaughterhouse, is a heavy and monotonous work which may be very straining, both physically and mentally. Besides, by the work with suspending or re-suspending poultry there may occur serious work environment problems as the hard and monotonous work is known to give strain damages to arms and back.

DE-A-30 48 342 discloses a method and an apparatus for transferring slaughtered poultry from a treatment station to successivly passing transport shackels of an overhead conveyor leading to a further treatment station, where the birds are transferred from individual carrying members of an endless coneyor.

The invention has the purpose of providing an improved method of suspending slaughtered poultry and which makes possible considerably facilitating the monotonous and heavy lifting work so that also the risk of strain damages may be reduced correspondingly.

The method according to the invention is characterised in that the chickens, for example from water chiller, preferably via belt conveyor, are delivered at the centre of a rotating distributing table surface, at which there are means arranged for successively pushing the chickens outward toward a rim area of said distributing table surface which is formed with positions along said rim area each arranged to accommodate one chicken that is placed and partly fixed in such a way that at least one leg of each chicken projects from the edge of the rim area so that at least one leg may be gripped by a transport shackle of said overhead conveyor with ascending extension and in a synchronised way pass close to one or more of said positions along the rim area of the rotating distributing table surface.

Hereby, by means of simple technical measures, there may be achieved a considerable facilitating of both the physically hard and mentally straining monotonous work with suspending of, for example, slaughtered chickens in transport shackles, as the personnel can stand in a good working posture and assist with pushing/sliding the chickens in place into said positions along the rim area of the rotating distributing table surface, i.e. the personnel completely avoids lifting each chicken.

Suitably, the method according to the invention may be modified in such a way that there is used a stationary plate spiral for successively pushing the chickens outward toward said rim area of the rotating distributing table surface.

By the method according to the invention, in said positions along the rim area of the distributing table surface there are preferably used fit pieces arranged to accommodate the breast or back side of a chicken and means arranged for fixing the chickens laterally, preferably by engagement between the legs of the chickens.

The invention also concerns an apparatus for suspending chickens according to the indicated method, which apparatus is characterised in that it comprises a rotating distributing table surface with a preferably central receiving position for chickens supplied successively by belt conveyor, means arranged for successively pushing the chickens outward toward a rim area of said distributing table surface comprising positions along said rim area arranged for accommodating and partly fixing a chicken in such a way that at least one leg of each chicken project out from the edge of the rim area so that at least one leg is allowed to be gripped by a transport shackle of an overhead conveyor with ascending extension, and which in a synchronised way passes close to one or more of said positions along the rim area of the rotating distributing table surface.

Suitably, the apparatus according to the invention is designed so that said means for successively pushing the chickens outward toward said rim area of the rotating distributing table surface is constituted by a stationary plate spiral, the centre of which is placed approximately in said central receiving position.

Preferably, the apparatus according to the invention is further designed so that said positions along the rim area of the distributing table surface are provided with fit pieces arranged for accommodating the breast or back side of a chicken and comprising means arranged to fix the chickens laterally and longitudinally, preferably by engagement between the chickens or between the legs of the chickens.

Besides, it may be advantageous that the apparatus according to the invention outside said positions along the rim area of the rotating distributing table surface along the substantial part of its circumference it comprises a stationary, curved rail serving to keep the personnel away from the protruding legs of the chickens.

The invention is explained more closely in the following in connection with the drawing, in which:
Fig. 1 shows a view from above of an embodiment of an apparatus for performing the method according to the invention, and
Fig. 2 shows a side view of the apparatus shown in Fig. 1.

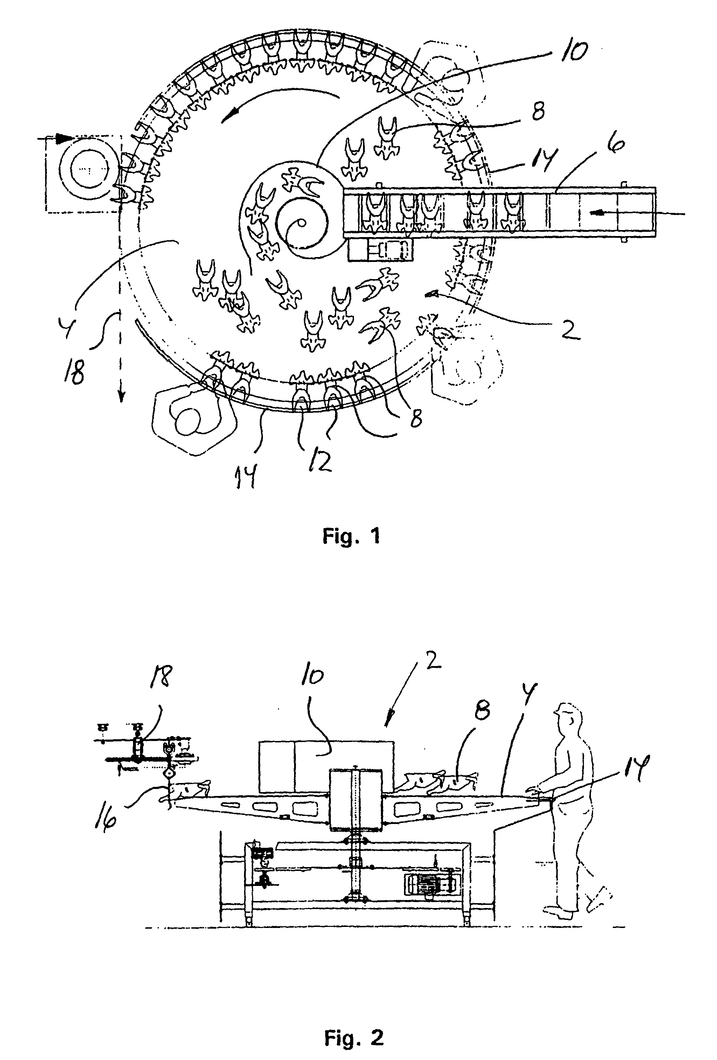

The suspending apparatus 2 shown in Figs. 1 and 2 comprises a mainly horizontal, circular distributing table surface 4 which is continually rotated counterclockwise and the height of which is adjusted to standing personnel, but which alternatively may be adjusted according to the height suitable for sitting personnel.

Via a belt conveyor 6 slaughtered poultry, preferably chickens 8, are supplied, for example from water chiller to the centre of the distributing table surface 4. Because of the rotation of the distributing table surface, a stationary, plate-shaped spiral 10 causes successive pushing of the chickens 8 outward toward a rim area of the distributing table surface 4 where the standing personnel without having to lift each chicken 8 easily push/slide the chickens 8 in place at specially arranged positions 12 along the periphery of the distributing table surface 4.

Each of the positions 12 are provided with a fit piece, which may be designed in thin steel plate or e.g. moulded in plastic, and which is arranged to accommodate the breast or back side of a chicken 8 in such a way that at least one leg of each chicken 8 projects outside the periphery of the distributing table surface 4. In practice, the said rim area of the distributing table surface 4 is constituted by an outer, sloping surface in the shape of a frustum of a cone whereon said fit pieces are mounted. Besides, each of said positions 12 are provided with a suitable guide preferably engaging between the chickens or between the legs of a single chicken, i.e. providing for correct lateral and longitudinal fixing of each chicken 8.

Along the main part of the circumference of the distributing table surface 4 there is fitted a stationary, curved rail 14 at a short distance from its periphery, primarily serving to keep the personnel away from the projecting legs until they shortly after running off the rail 14 at position A are gripped by transport shackles 16 of an overhead conveyor 18 with ascending extension, the speed of which, of course, is synchronised with the rotational speed of the distributing table surface 4.

## Claims

1. A method for suspending poultry to be slaughtered, particularly chickens, from transport shackles (16) of an overhead conveyor (18), ***characterized* in that** the chickens (8), for example from water chiller, preferably via a belt conveyor (6), are delivered at the centre of a rotating distributing table surface (4), at which there are means (10) arranged for successively pushing the chickens (8) outward toward a rim area of said distributing table surface (4) which is provided with positions (12) along said rim area each arranged to accommodate one chicken that is placed and partly fixed in such a way that at least one leg of each chicken projects from the edge of the rim area so that at least one leg may be gripped by a transport shackle (16) of said overhead conveyor (18) with ascending extension and in a synchronised way pass close to one or more of said positions (12) along the rim area of the rotating distributing table surface (4).

2. A method according to claim 1, ***characterized* in that** there is used a stationary plate spiral (10) for successively pushing the chickens outward toward said rim area of the rotating distributing table surface (4).

3. A method according to claim 1, ***characterized* in that** in said positions (12) along the rim area of the distributing table surface (4) there are used fit pieces arranged to accommodate the breast or back side of a chicken and means arranged for fixing the chickens laterally, preferably by engagement between the legs of the chickens.

4. An apparatus for suspending poultry to be slaughtered, particularly chickens, according to the method according to claim 1, ***characterized* in that** it comprises a rotating distributing table surface (4) with a preferably central receiving position for chickens supplied successively by a belt conveyor (6), means (10) arranged for successively pushing the chickens outward toward a rim area of said distributing table surface (4) comprising positions (12) along said rim area arranged for accommodating and partly fixing a chicken in such a way that at least one leg of each chicken project out from the edge of the rim area so that at least one leg is allowed to be gripped by a transport shackle (16) of an overhead conveyor (18) with ascending extension, and which in a synchronised way passes close to one or more of said positions (12) along the rim area of the rotating distributing table surface (4).

5. An apparatus according to claim 4, ***characterized* in that** said means for successively pushing the chickens (8) outward toward said rim area of the rotating distributing table surface (4) is constituted by a stationary plate spiral (10), the centre of which is placed approximately in said central receiving position.

6. An apparatus according to claim 4, ***characterized* in that** said positions (12) along the rim area of the distributing table surface (4) are provided with fit pieces arranged for accommodating the breast or back side of a chicken and comprising means arranged to fix the chickens laterally and longitudinally, preferably by engagement between the chickens or between the legs of the chickens.

7. An apparatus according to claim 4, ***characterized* in that** outside said positions along the rim area of the rotating distributing table surface (4) along the substantial part of its circumference it comprises a stationary, curved rail (14) serving to keep the personnel away from the protruding legs of the chickens (8).

## Patentansprüche

1. Verfahren zum Aufhängen von Schlachtgeflügel, insbesondere Hühnern, an Transportbügeln (16) eines Überkopfförderers (18), **dadurch gekennzeichnet, dass** die Hühner (8) zum Beispiel aus einem Wasserkühler bevorzugt über einen Bandförderer (6) in die Mitte einer rotierenden Verteiltischfläche (4) befördert werden, an der eine Einrichtung (10) zum aufeinander folgenden Schieben der Hühner (8) nach außen in Richtung auf eine Randfläche der Verteiltischfläche (4) angeordnet ist, die mit Stellungen (12) entlang der Randfläche versehen ist, die jeweils dafür eingerichtet sind, ein Huhn aufzunehmen, das derart platziert und teilweise befestigt wird, dass mindestens ein Bein jedes Huhns von der Kante der Randfläche vorsteht, so dass mindestens ein Bein von einem Transportbügel (16) des Überkopfförderers (18), der eine aufsteigende Ausdehnung aufweist und auf synchronisierte Weise nahe an einer oder mehreren der Stellungen (12) entlang der Randfläche der rotierenden Verteiltischfläche (4) vorbeigeht, ergriffen werden kann.

2. Verfahren nach Anspruch 1, **dadurch gekennzeichnet, dass** eine stationäre Plattenspirale (10) zum aufeinander folgenden Schieben der Hühner nach außen in Richtung auf die Randfläche der rotierenden Verteiltischfläche (4) verwendet wird.

3. Verfahren nach Anspruch 1, **dadurch gekennzeichnet, dass** in den Stellungen (12) entlang der Randfläche der Verteiltischfläche (4) Passstücke, die dafür eingerichtet sind, die Brust oder Rückseite eines Huhns aufzunehmen, und eine Einrichtung verwendet werden, die dafür eingerichtet ist, die Hühner seitlich zu befestigen, bevorzugt durch Eingriff zwischen den Beinen der Hühner.

4. Vorrichtung zum Aufhängen von Schlachtgeflügel, insbesondere Hühnern, in Übereinstimmung mit dem Verfahren nach Anspruch 1, **dadurch gekennzeichnet, dass** sie eine rotierende Verteiltischfläche (4) mit einer bevorzugt mittigen Aufnahmestellung für Hühner, die aufeinander folgend von einem Bandförderer (6) zugeführt werden, eine Einrichtung (10), die dafür eingerichtet ist, die Hühner aufeinander folgend nach außen in Richtung auf eine Randfläche der Verteiltischfläche (4) zu schieben, die Stellungen (12) entlang der Randfläche aufweist, die dafür eingerichtet sind, ein Huhn aufzunehmen und teilweise zu befestigen, derart, dass mindestens ein Bein jedes Huhns von der Kante der Randfläche vorsteht, so dass mindestens ein Bein von einem Transportbügel (16) eines überkopfförderers (18) mit aufsteigender Ausdehnung ergriffen werden kann, der auf synchronisierte Weise nahe an einer oder mehreren der Stellungen (12) entlang der Randfläche der rotierenden Verteiltischfläche (4) vorbeigeht.

5. Vorrichtung nach Anspruch 4, **dadurch gekennzeichnet, dass** die Einrichtung (10) zum aufeinander folgenden Schieben der Hühner (8) nach außen in Richtung auf die Randfläche der rotierenden Verteiltischfläche (4) durch eine stationäre Plattenspirale (10) gebildet wird, deren Mitte ungefähr in die mittige Aufnahmestellung gelegt ist.

6. Vorrichtung nach Anspruch 4, **dadurch gekennzeichnet, dass** die Stellungen (12) entlang der Randfläche der Verteiltischfläche (4) mit Passstücken versehen sind, die dafür eingerichtet sind, die Brust oder Rückseite eines Huhns aufzunehmen, und eine Einrichtung aufweisen, die dafür eingerichtet ist, die Hühner seitlich und in Längsrichtung zu befestigen, bevorzugt durch Eingriff zwischen den Hühnern oder zwischen den Beinen der Hühner.

7. Vorrichtung nach Anspruch 4, **dadurch gekennzeichnet, dass** sie außerhalb der Stellungen entlang der Randfläche der rotierenden Verteiltischfläche (4) entlang des wesentlichen Teils ihres Umfangs eine stationäre gekrümmte Schiene (14) aufweist, die dazu dient, das Personal von den vorstehenden Beinen der Hühner (8) fernzuhalten.

## Revendications

1. Procédé pour suspendre des volailles à abattre, particulièrement des poulets, à des attaches de transport (16) d'un convoyeur aérien (18), **caractérisé en ce que** les poulets (8), par exemple par un dispositif de refroidissement à eau, de préférence par un convoyeur à bande (6), sont transmis au centre d'une surface de table de distribution tournante (4) où sont prévus des moyens (10) agencés pour pousser successivement les poulets (8) vers l'extérieur, vers une zone de bord de ladite surface de table de distribution tournante (4) qui présente des positions (12) le long de ladite zone de bord, chacune agencée pour recevoir un poulet qui est placé et partiellement fixé de telle manière qu'au moins une patte de chaque poulet fait saillie du bord de la zone de bord de telle sorte qu'au moins une patte peut être saisie par une attache de transport (16) dudit convoyeur aérien (18), avec une extension ascendante et qui passe d'une manière synchronisée à proximité d'une ou de plusieurs desdites positions (12) le long de la zone de bord de la surface de table de distribution tournante (4).

2. Procédé selon la revendication 1, **caractérisé en ce qu'**une spirale en tôle stationnaire (10) est utilisée pour pousser successivement les poulets vers ladite zone de bord de la surface de table de distribution tournante (4).

3. Procédé selon la revendication 1, **caractérisé en ce que**, dans lesdites positions (12) le long de la zone de bord de la surface de table de distribution (4), des pièces adaptées sont agencées pour recevoir la poitrine ou un côté arrière d'un poulet, et des moyens sont agencés pour immobiliser les poulets latéralement, de préférence par un engagement entre les pattes des poulets.

4. Appareil pour suspendre des volailles à abattre, en particulier des poulets, selon le procédé en accord avec la revendication 1, **caractérisé en ce qu'**il comprend une surface de table de distribution tournante (4) avec une position de réception de préférence centrale pour des poulets amenés successivement par un convoyeur à bande (6), des moyens (10) agencés pour pousser successivement les poulets vers l'extérieur, vers une zone de bord de ladite surface de table de distribution (4) comprenant des positions (12) le long de ladite zone de bord agencées pour recevoir et immobiliser partiellement un poulet de telle manière qu'au moins une patte de chaque poulet dépasse du bord de la zone de bord de telle sorte qu'au moins une patte peut être saisie par une attache de transport (16) d'un convoyeur aérien (18) avec une extension ascendante, et qui passe d'une manière synchronisée à proximité d'une ou de plusieurs desdites positions (12) le long de la zone de bord de la surface de table de distribution tournante (4).

5. Appareil selon la revendication 4, **caractérisé en ce que** ledit moyen pour pousser successivement les poulets (8) vers l'extérieur, vers ladite zone de bord de la surface de table de distribution tournante (4), est constitué par une spirale en tôle stationnaire (10) dont le centre est placé approximativement dans ladite position de réception centrale.

6. Appareil selon la revendication 4, **caractérisé en ce que** lesdites positions (12) le long de la zone de bord de la surface de table de distribution (4) présentent des pièces adaptées agencées pour recevoir la poitrine ou le côté arrière d'un poulet et comprenant des moyens agencés pour fixer les poulets latéralement et longitudinalement, de préférence par engagement entre les poulets ou entre les branches des poulets.

7. Appareil selon la revendication 4, **caractérisé en ce que**, à l'extérieur desdites positions le long de la zone de bord de la surface de table de distribution tournante (4) sur la partie substantielle de sa circonférence, il comprend un rail stationnaire courbé (14) destiné à maintenir le personnel au loin des pattes saillantes des poulets (8).
